# EUROPEAN PATENT APPLICATION

(11) **EP 1 437 689 A1**
(43) Date of publication of application: **14.07.2004**
(21) Application number: 02772906.0
(22) Date of filing: 25.09.2002
(51) Int. Cl.: G06T 17/40, G06T 15/00

(54) **IMAGE CREATION APPARATUS AND METHOD, ELECTRONIC DEVICE, AND COMPUTER PROGRAM**

(30) Priority: 26.09.2001 JP 2001295140
(71) Applicant: Pioneer Corporation, Tokyo 153-8654 (JP)
(72) Inventor: MATSUMOTO, Reiji, c/o PIONEER CORPORATION, Tsurugashima-shi, Saitama 350-2288 (JP); ADACHI, Hajime, c/o PIONEER CORPORATION, Tsurugashima-shi, Saitama 350-2288 (JP)
(74) Representative: Haley, Stephen
(86) International application number: PCT/JP2002/009842
(87) International publication number: WO 2003/027962

(57) **Abstract**

An image generating apparatus (1) is provided with a drawing application processor (11) and a graphics library (12) that allow a drawing device (13) to generate a three-dimensional image. The drawing application processor (11) separately includes: a coordinate transformation information generation device for generating coordinate transformation information to generate an image; and a drawing object information generation device for generating drawing object information. The drawing device (13) generates the three-dimensional image by incorporating the coordinate transformation information with the drawing object information. Thereby, performability at high speed in an image generation and replaceability of the drawing device are ensured.

## Description

### Technical Field

The present invention relates to an image generating apparatus for and method of generating a three-dimensional (3D) image on the basis of three-dimensional coordinate information, an electronic equipment such as a navigation system incorporating such an image generating apparatus, and a computer program.

### Background Art

Recently, there is remarkable R&D (research and development) about an electronic control for controlling a motion of a car as well as remarkable popularization of navigation systems to assist a car driving. The navigation system has a basic configuration, including various databases, for displaying map information, current position information, various guidance information and the like on a display unit. Furthermore, it is typically for the navigation system to search a drive route on the basis of an entered condition. It is further designed so as to display the searched drive route and a current position based on a GPS (Global Positioning System) measurement or a self-contained measurement on a map and carry out guidance (navigation) to a destination.

Incidentally, on the display unit of the navigation system that is mounted on a vehicle for the guidance (navigation) to the destination, a sight ahead of a current driving point is displayed, in addition to the drive route, and further an instruction for a driving lane, a direction to go in an intersection, a distance to the intersection, a distance to a destination, arrival time estimation and so on are displayed. Then, the sight ahead of the current driving point may be displayed in a manner that gives a three-dimensional visual effect on a plane, i.e. as an image in perspective (herein referred to as so-called "3D image"), on the basis of the driver's visual line.

By the way, in order to display the 3D image as mentioned above with the course of time, it is required to calculate at high speed an enormous amount of map data including the three-dimensional coordinate information, which is sequentially inputted into the drawing device to be transformed into the 3D image. Therefore, there has been a way of generating the 3D image by processing, in a batch mode, a combination of the drawing object information, which is for indicating an object to be depicted such as roads or building, and the coordinate transformation information, which is for indicating a visual point, a visual range, a light source and so on. Nevertheless, in this case, the coordinate transformation information is transformed into a drawing device processable form with the aid of an emulation of the CPU and then inputted into a drawing device, in the case that the drawing device to be employed is incapable of processing all the coordinate transformation information. There is a problem in performability at high speed and the ability of replacement, because a drawing method to be employed depends on a specific drawing device.

On the other hand, as for the aforementioned drawing device, one new model after another is supplied. Therefore, in the case that a new drawing device is introduced into a system, it is required to change a preparing device for the image information data to be inputted into the drawing device, and this prevents an efficient and effective preparation of apparatus only with a replacement of the drawing device. Namely, the reason is that a coordinate transformation, which is an important element in the drawing, acts as a state machine having a state therein, and thereby a replacement of a single function as seen in a typical library to absorb a device dependence is not sufficient to cover the drawing device performance in the drawing.

### Summary of The Invention

The present invention has been accomplished in view of the above problems and aims to provide an image generating apparatus and method improved in its processability at high speed and the ability of replacement, thereby applicable relatively easily to various drawing devices, to provide an electronic equipments incorporating such an image generating apparatus and to provide a computer program.

The image generating apparatus according to the present invention in order to solve the above problems is embodied in an image generating apparatus having a drawing application processor and a graphics library that allow a drawing device to generate a three-dimensional image, wherein the drawing application processor is provided with (i) a drawing object information generating device for generating drawing object information to generate an image for each object in a single coordinate system for each predetermined information unit, on the basis of three-dimensional coordinate information included in a three-dimensional image to be generated, and (ii) a coordinate transformation information generating device for generating coordinate transformation information to define at least a visual point and a visual range when the three-dimensional image is to be generated, the graphics library is provided with (i) a drawing object information storing device for storing the generated drawing object information, and (ii) a coordinate transformation information storing device for storing the generated coordinate transformation information, the drawing device generates the three-dimensional image by incorporating the stored coordinate transformation information with the stored drawing object information, for the each predetermined information unit.

According to the image generating apparatus of the present invention, the image generating apparatus provided with the drawing application processor and the graphics library generates, stores and manages data, which is divided into the coordinate transformation information and the drawing object information, each of which is generated by their respective information generating devices, in order to generate an image. On the basis of these stored and managed data, the drawing device generates a 3D image as a display image and outputs it to a display unit.

In this case, a batch execution of the drawing processing based on the coordinate transformation information and the drawing object information that are handled separately and independently improves a drawing speed of the drawing device and facilitates an introduction of various drawing devices. This is because that a data configuration according to the present invention avoids the limitation as seen in the prior data configuration wherein the coordinate transformation, which is an important element in the drawing, acts as a state machine having a state therein, and thereby a replacement of a single function as seen in a typical library to absorb a device dependence is not sufficient to cover the drawing device performance in the drawing.

As a result, the present invention enables improvement in the ability of replacement of the drawing device that generates a 3D image from the three-dimensional coordinate information as information source.

Incidentally, specifically in the present invention, with regard to an expression "generating drawing object information in a single coordinate system for each predetermined information unit" about the drawing object information generating device, the "predetermined information unit" herein means a unit of display list for example, and corresponds to a unit of the coordinate transformation information to be incorporated with the drawing object information when the drawing device generates a 3D image. Further, although the coordinate system is unified in the same predetermined information unit such as the same playlist, the coordinate system is not necessarily unified among different predetermined information units.

In an aspect of the image generating apparatus of the present invention, a plurality of coordinate transformation information generated by the coordinate transformation information generating device are stored into the coordinate transformation information storing device, a plurality of drawing object information generated by the drawing object information generating device are stored into the drawing object information storing device, and the drawing device generates the three-dimensional image from a desired combination of the coordinate transformation information and the drawing object information.

According to this aspect, the desired combination from among some coordinate transformation information and some drawing object information, all of which are stored, can be selected to generate an image in the drawing device, to promptly display the image or to display various image along the user's request.

In another aspect of the image generating apparatus of the present invention, a list preparation program for preparing a list of the drawing object information; a set up program for setting up the coordinate transformation information; and an execution instruction program for instructing an execution of a drawing in said drawing device are executed.

According to this aspect, providing the list preparation program for preparing a so-called "display list" and the set up program for setting up the coordinate transformation information enables to handle the drawing object information and the coordinate transformation information independently from each other, each of which is supplied to the graphics library to be connected to the later stage, with an execution command. Thereby, if a system comprised of the graphics library and the drawing device is replaced to another system of another combination, its ability of replacement is maintained. Additionally, altering the coordinate transformation information while maintaining the drawing object information facilitates to generate the 3D image of the same drawing object with different coordinates.

In another aspect of the image generating apparatus of the present invention, the graphics library includes: a function for managing the coordinate transformation information; a function for managing the drawing object information; and a function for controlling said drawing device.

According to this aspect, owing to the function for managing the coordinate transformation information, the function for managing the drawing object information, and the function for controlling the drawing device, all of which are provided to the graphics library, a 3D image that the drawing device actually generates is controlled.

In another aspect of the image generating apparatus of the present invention, the drawing application processor includes a function in which map information including the three-dimensional coordinate information is supplied from a map database incorporated within a navigation system.

According to this aspect, on the basis of the map information from the map database, and further on the basis of current position information from a GPS positioning apparatus or the like incorporated within the navigation system and/or route information inputted by the driver, a 3D image based on the map information including the three-dimensional coordinate information, which is subjected to a predetermined coordinate transformation, is displayed on the display. Moreover, for the convenience of the driver, guidance information without the coordinate transformation may be superimposed onto the 3D image and then displayed.

In another aspect of the image generating apparatus of the present invention, a system comprised of the graphics library and the drawing device has a mechanism replaceable with respect to the drawing application processor.

According to this aspect, in the image generating apparatus of the present invention, a system including the graphics library and the drawing device can be replaced as a unit relative to the drawing application processor, and this mechanism facilitates a mounting and dismounting or replacement of the system.

In another aspect of the image generating apparatus of the present invention, the drawing device generates an image in perspective as the three-dimensional image.

According to this aspect, a scene such as a sight of the driver who sits and drives at the driver's seat is displayed as the 3D image in perspective, and thereby the driver can easily recognize the 3D image, in association with a real scene.

In another aspect of the image generating apparatus of the present invention, the coordinate transformation information includes information to define a light source, in addition to the information to define the visual point and the visual range.

According to this aspect, the drawing object can be transformed on the basis of the light source information in addition to the visual point information and the visual range information as the coordinate transformation information, to be displayed as more real image. On the other hand, if the drawing device is replaced, the coordinate transformation information such as the visual point information, visual range information, light source information and the like is applicable as it is and thereby the real image is ensured while the ability of replacement is maintained.

In another aspect of the image generating apparatus of the present invention, the visual point is set on the basis of a visual point of a driver of a vehicle.

According to this aspect, a scene as a sight on the visual line of the driver is displayed as the 3D image, and thereby the driver can easily recognize the image as the image in perspective linked with the real scene. The visual point may be set up manually.

In another aspect of the image generating apparatus of the present invention, the visual range is set on the basis of a visual range of a driver of a vehicle.

According to this aspect, a scene within the visual range of the driver is displayed as the 3D image. The visual range may be set up manually.

In another aspect of the image generating apparatus of the present invention, the visual point in the 3D image is set at a center of a display device incorporated within a navigation system.

According to this aspect, a drawing object is subjected to the coordinate transformation to be displayed, for example, such that the visual point of the driver is positioned at the center of the display.

In another aspect of the image generating apparatus of the present invention, the drawing device generates a three-dimensional image by superimposing a plurality of partial frame images that are generated on the basis of the plurality of drawing object information generated and stored for each object.

According to this aspect, the 3D image that is generated by superimposing the plurality of partial frame images that are generated in accordance with each drawing object information is finally obtained and thereby a 3D image with more reality can be generated relatively quickly by the drawing device.

In this aspect, a frame buffer for temporarily storing the plurality of partial frame images may be further provided.

Owing to this arrangement, since the plurality of partial frame images are temporarily stored in the frame buffer, which may be disposed within a buffer memory managed by the drawing device, a 3D image can be generated relatively easily by superimposing them.

In another aspect of the image generating apparatus of the present invention, the drawing application processor re-generates the coordinate transformation information with the aid of the coordinate transformation information generating device, while the drawing object information is maintained for an object commonly included in two three-dimensional images in series, which differ sequentially from each other with the course of time.

According to this aspect, in the case that a 3D image that changes sequentially with the course of time is to be drawn, the coordinate transformation information is changed while the drawing object information is maintained, and thereby a process workload for the drawing can be reduced and the 3D image that changes sequentially can be generated quickly. For instance, on the basis of the same drawing object information, not only a series of images that changes sequentially in accordance with the movement of the vehicle is obtained by sequentially changing the visual point, but also a series of images in which shade or the like of an object continuously changes with the course of time is obtained by sequentially changing the light source.

In another aspect of the image generating apparatus of the present invention, the drawing application processor and the graphics library generate and store the drawing object information and the coordinate transformation information for the plurality of three-dimensional images in a multitask operation.

According to this aspect, since the coordinate transformation information and the drawing object information are generated and stored separately and independently in the multitask operation, it is feasible to generate the 3D image even faster as a whole.

In another aspect of the image generating apparatus of the present invention, the image generating apparatus comprises the drawing device.

According to this aspect, the image generating apparatus is further provided with the drawing device internally or externally, in addition to the drawing application processor and the graphics library. Therefore, an environment capable of displaying the 3D image is obtained relatively easily, if a display unit such as a monitor is connected to the image generating apparatus.

An electronic equipment according to the present invention in order to solve the above problems is provided with: the aforementioned image generating apparatus (including various aspects thereof); an information source from which the three-dimensional information is supplied to the drawing application processor; and a display device for visually outputting the three-dimensional image that is generated by the drawing device.

According to the electronic equipment of the present invention, since the image generating apparatus of the present invention is employed, various electronic equipments can be implemented, including a navigation system such as on-vehicle navigation system capable of quickly displaying the 3D image, a game machine such as an arcade game, a TV game or the like, otherwise a computer such as a personal computer capable of displaying the 3D image.

The computer program according to the present invention, in order to solve the above problems, makes a computer function as the image generating apparatus as mentioned above (including various aspects of each image generating apparatus). More specifically, it makes a computer function as the drawing application processor, the graphics library and the drawing device, which are mentioned above as the components of the present invention. Further in detail, it makes a computer function as the drawing object information generating device, the coordinate transformation generating device, the drawing object information storing device and the coordinate transformation information storing device, which are mentioned above as the components of the present invention.

According to the computer program as the present invention, an integrated control for the image generating apparatus according to the present invention can be achieved relatively easily, by loading the computer program from a record medium such as a CD-ROM (Compact Disc Read Only Memory), a DVD-ROM (DVD Read Only Memory), a hard disk or the like, which stores the computer program, into the computer and executing the program, otherwise by downloading the computer program into the computer via a communication device and executing the program.

An image generating method according to the present invention in order to the above problems is embodied in an image generating method performed by an image generating apparatus having a drawing application processor and a graphics library that allow a drawing device to generate a three-dimensional image, characterized in that the drawing application processor executes (i) a drawing object information generating process of generating drawing object information to generate an image for each object in a single coordinate system for each predetermined information unit, on the basis of a three-dimensional coordinate information included in the three-dimensional image to be generated, and (ii) a coordinate transformation information generating process of generating coordinate transformation information to define at least a visual point and a visual range when the three-dimensional image is to be generated, the graphics library executes (i) a drawing object information storing process of storing the generated drawing object information, and (ii) a coordinate transformation information storing process of storing the generated coordinate transformation information, and the drawing device generates the three-dimensional image by incorporating the stored coordinate transformation information with the stored drawing object information, for the each predetermined information unit.

According to the image generating method of the present invention, similarly to the case of the image generating apparatus according to the present invention mentioned above, data is divided into the coordinate transformation information and the drawing object information in order to generate an image, and each of them is generated, stored and managed by their respective generating device. On the basis of these stored and managed data, the drawing device generates a 3D image as a display image and outputs it to the display unit. In this case, handling the coordinate transformation information and the drawing object information separately and independently, and executing a batch drawing process based on these kinds of information, improve a drawing speed of the drawing device, and facilitate an introduction of different drawing device. As a result, according to the present invention, it is possible to improve the ability of replacement of the drawing device, which generates a 3D image from three-dimensional coordinate information as an information source.

Furthermore, in an aspect of the image generating method according to the present invention, the drawing application processor executes: a list preparation process of preparing a list of the drawing object information; a set up process of setting up the coordinate transformation information; and an execution instruction process of instructing an execution of a drawing in the drawing device.

According to this aspect, owing to a list preparing program for preparing a so-called "display list", and a program for setting up the coordinate transformation information, the drawing object information and the coordinate transformation information are handled separately, and thereby, the ability of replacement of a system comprised of the graphics library and the drawing device is maintained, even if the system is replaced by another system comprised of another combination. On the other hand, while maintaining the drawing object information, altering the coordinate transformation information facilitates to obtain an 3D image of the same drawing object with different coordinates.

Furthermore in another aspect of the image generating method according to the present invention, the graphics library executes: a process of managing the coordinate transformation information; a process of managing the drawing object information; and a process of controlling the drawing device.

According to this aspect, owing to the process of managing the coordinate transformation information included in the graphics library; the process of managing the drawing object information; and the process of controlling the drawing device, the 3D image to be actually generated by the drawing device is controlled.

As mentioned above, according to the present invention, since the coordinate transformation information and the drawing object information are handled separately, the coordinate transformation information is not added to the display list. Therefore, a coordinate transformation parameter to be applied to a predetermined display list is only for it, and thereby with regard to a coding in the drawing application processor to generate the display list, a coordinate transformation that is computable in advance is executed at the coding. Therefore, information relating to the coordinate transformation becomes independent of the drawing device, and obtains the higher ability of replacement. That is, it is possible to introduce other kinds of drawing device.

Furthermore, it is also possible to obtain the higher performability, since the display list enables the drawing device to execute directly a batch process.

The above and other advantages and effect of the present invention will be more apparent in the following embodiments of the invention.

### Brief Description of The Drawings

FIG. 1 is a block diagram illustrating a fundamental configuration of an image generating apparatus as a first embodiment of the present invention.
FIG. 2 is a view of illustrating an internal structure of a graphics library and ability of replacement of a drawing application, in the image generating apparatus.
FIG. 3 is a view of illustrating management of a scene object, in the image generating apparatus.
FIG. 4 is a flow chart showing a process flow of the graphics library.
FIG. 5 is a flow chart showing a process flow of the drawing device in the image generating apparatus.
FIG. 6 is a sequential chart showing an operation of the image generating apparatus.
FIG. 7 is an example of generated image.
FIG. 8 is a view showing a construction of a navigation system applied to the image generating apparatus according to the present invention as a second embodiment.

### The Best Modes to Carry Out The Present Invention

The embodiments according to an image generating apparatus and an image generating method as well as a computer program in the present invention are explained below with reference to the drawings. Incidentally, each of the embodiments described below is dedicated to the image generating apparatus of the present invention that is used for an on-vehicle navigation system. Nevertheless, the present invention may be suitably applied to an image generation using a personal computer, to an image generation for a TV game or to other purposes.

### (First Embodiment)

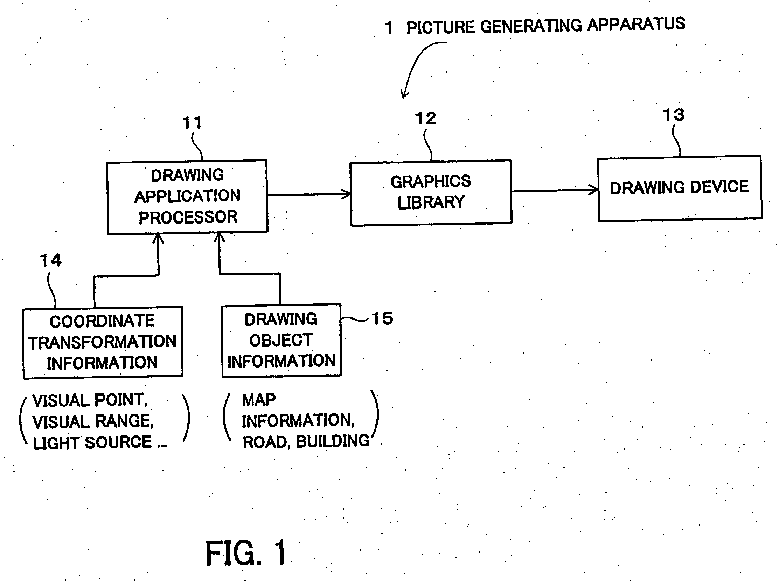

An image generating apparatus in the first embodiment is described below with reference to FIG. 1 to FIG. 7.

At first, the basic configuration of the image generating apparatus in this embodiment is described with reference to FIG. 1.

In FIG. 1, the image generating apparatus 1 is provided with a drawing application processor 11, a graphics library 12 and a drawing device 13, wherein coordinate transformation information 14 such as a visual point, a visual range, a light source or the like and drawing object information 15 such as a road, a building, map information or the like are inputted into the drawing application processor 11. The graphics library 12 and the drawing device 13 constitute together a system as a unit, which may be optionally replaced as the unit relative to the drawing application processor 11, as discussed below in detail. This contributes to improvement in the ability of replacement, which is a distinctive feature of the present invention.

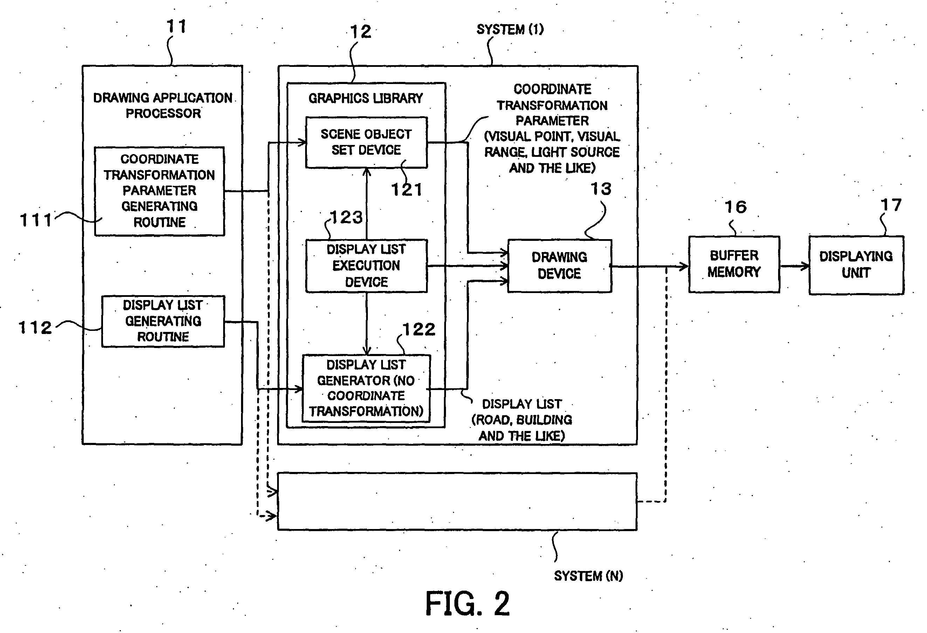

As shown in FIG.2, the drawing application processor 11 has a coordinate transformation parameter generation routine 111 and a display list generation routine 112. The coordinate transformation parameter generation routine 111 generates coordinate transformation data on the basis of the coordinate transformation information such as the visual point, the visual range, the light source or the like, which is inputted as the coordinate transformation information 14. This data is managed as a scene object in the graphics library 12. An operation of setting parameters for the scene object as well as an operation of applying the scene object to the drawing on the basis of the parameters that is already set, is executed relative to an identifier of the scene object.

On the other hand, the display list generation routine 112 generates the drawing object information from the road, the building, the map information or the like, and inputs it into the graphics library 12. This drawing object information does not include the coordinate transformation information. The coordinate transformation information is independently set as the scene object as previously discussed. In this way, the drawing object information and the coordinate transformation information are generated independently of each other, but the former is incorporated into the latter to generate the image, if needed. This allows the above-mentioned replacement of the system and an improvement in the drawing speed.

Next, the graphics library 12 has a scene object set device 121, a display list preparation device 122 and a display list execution device 123.

The scene object set device 121 stores and manages the coordinate transformation information that is generated through the coordinate transformation parameter generation routine 111 in the drawing application processor 11 into the scene object corresponding to the identifier that is designated by the drawing application. The display list preparation device 122 prepares a display list that is generated through the display list generation routine 112 in the drawing application processor 11 so as to be directly and collectively (in a batch processing) executed for the higher speed drawing by the drawing device 13.

On the other hand, the display list execution device 123 controls the drawing device 13, while making the scene object set device 121 and the display list preparation device 122 send the display list and the coordinate transformation parameters, both of which are processed so as to allow the batch processing of the coordinate transformation information and the drawing object information, into the drawing device 13 to execute the drawing operation.

In this graphics library 12, the coordinate transformation information and the drawing object information are separately stored, and when the image is to be generated, in the drawing device 13, the coordinate transformation information are incorporated into the drawing object information for the coordinate transformation and the image generation by adding conditions such as the visual point, the visual range, the light source or the like, which are set as the scene objects. Therefore, the drawing object information stored in a single list is formed as display list on the basis of a single coordinate system that does not depend on the visual point or the visual range.

The image that is generated at the drawing device 13 is once stored in a buffer memory 16, then inputted into the display device 17 and displayed.

Here, according to the method of the present invention, i.e. generating and managing the coordinate transformation information and the drawing object information separately, the system (1) including the graphics library 12 and the drawing device 13 can be constructed independently of the drawing application processor 11. Therefore, the system (1) can be replaced by another system (N) including the graphics library 12 and the drawing device 13, resulting in drastic improvement of convenience based on a wide range of options in the apparatus design, the making, the manufacturing, the maintenance or the like.

Moreover, multiple scene objects having different identifiers may be stored or multiple display lists for different drawing object informations may be stored. Generating the image by combining the multiple scene objects and the multiple display lists in response to the situation has an effect of generating different images having different coordinate systems at high speed. For instance, in the case that multiple images that changes continuously or sequentially is to be generated, only the coordinate transformation information is changed (i.e. only the visual point and field, or only the light source is changed), while the display list relating to the drawing object commonly contained in these images is maintained, and thereby a 3D images that changes continuously or sequentially can be relatively readily generated.

Additionally, in FIG. 2, only a single buffer memory 16 is shown for the sake of convenience, but multiple buffer memories may be provided, which are for temporarily storing multiple partial frame images depicted respectively on the basis of multiple drawing object informations that are generated and stored for each object, and one 3D image obtained by superimposing these multiple images may be outputted from the drawing device 13. Furthermore, this superimposing can be made at the drawing device 13, while a Z-buffer is used to remove the hidden part from among the multiple images that are superimposed as mentioned above.

More particularly, handling multiple scene objects and multiple display lists simultaneously in the drawing application processor 11 and the graphics library 12 is advantageous to improve in the processing speed of the multi task drawing.

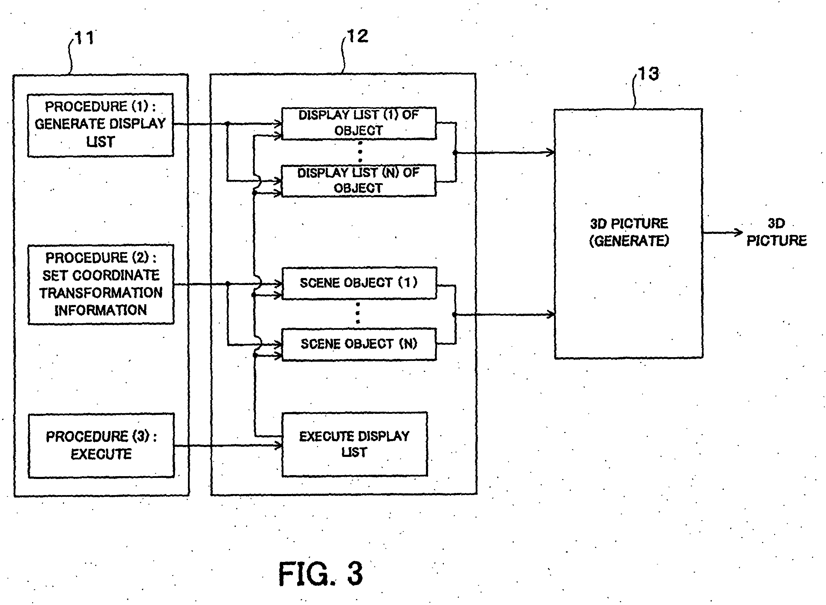

Next, referring to FIG. 3, the procedure for generating the 3D image is described below. At first, at the drawing application processor 11, a display list is generated (Procedure #1). The generated display list is stored as an object display list #1 in the graphics library 12. Next, coordinate transformation information is set (Procedure #2). The coordinate transformation information is stored in a scene object #1. Next, a command or instruction to generate the image is provided (Procedure #3). The object display list #1 and the scene object #1 in the graphics library 12 are accessed to input each data into the drawing device 13 to generate the image.

The drawing device 13 has the 3D coordinate transformation function, and thereby generates and displays the drawing object information in three dimension, such as a 3D scene ahead of the driver during the driving, on the basis of the coordinate transformation parameters that is designated by the identifiers, for example on the basis of the driver's view (visual point and visual range), the light source or the like if the vehicle is running. Relating to this, multiple display lists and multiple scene objects may be generated and stored in advance so as to generate the image from the combination of them as appropriate.

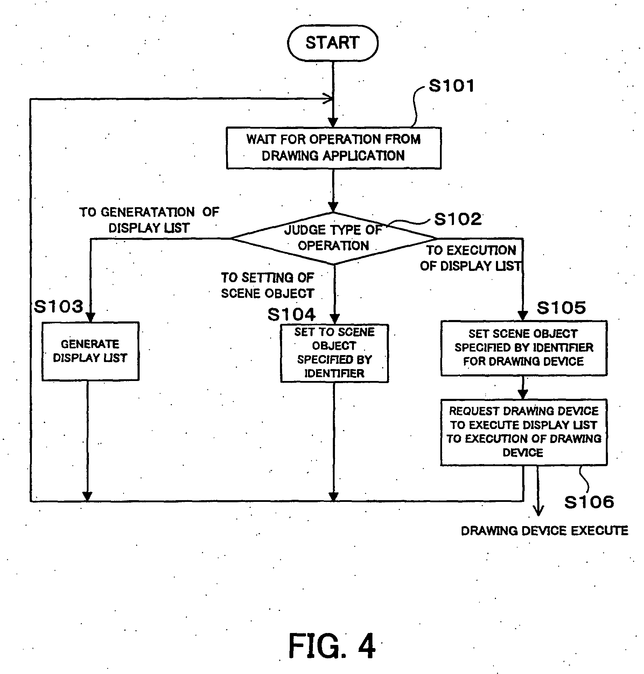

Next, the operational flow of the graphics library 12 is described below with reference to FIG.4.

At first, if there is an operation input in a waiting state that is waiting for the operation input from the drawing application processor 11 (Step S101), a type of the operation is judged (Step S102). The type of the operation in the graphics library 12 may be the display list preparation, the scene object setting or the display list execution, as mentioned above.

If a command or instruction for the display list preparation is provided, the display list is generated on the basis of the drawing object information such as roads, buildings and the like (Step S103). Once the display list is generated, the process goes back to the step S101 and waits for the next operation input.

As a result of the judgement at the step S102, if the operation input is for the scene object setting, the scene object that is designated by the identifier of the coordinate transformation information, such as the driver's view (visual point and visual range), the light source or the like, is set (step S104). Once the scene object setting is completed, the process goes back to the step S101 again, and waits for the next operation input.

As a result of the judgement at the step S102, if the operation input is for the display list execution, the scene object that is designated by the identifier is set for the drawing device13 (step S105), and a request for the display list execution is sent to the drawing device 13 (step S106).

After that, the process goes back to the step S101 and waits for the next operation input. The drawing device 13 executes the display lists in a batch processing to generate the image. The execution procedure is in line with the execution procedures described with reference to FIG. 3.

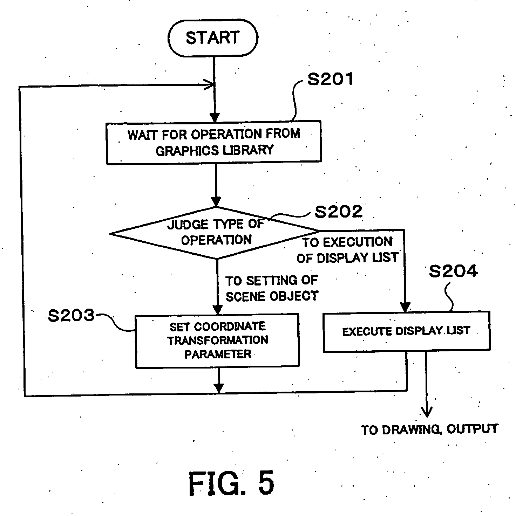

The operational flow of the drawing device 13 is described below with reference to FIG. 5.

At first, if there is an operation input in a waiting state that is waiting for the operation input from the graphics library 12 (Step S201), a type of the operation is judged (Step S202). The type of the operation may be the scene object setting and the display list execution.

If the operation input is for the scene object setting, the drawing device 13 sets the coordinate transformation parameters based on the identifiers (Step S203). Once the coordinate transformation parameter setting is completed, the process goes back to the step S201 again and waits for the next operation input.

As a result of the judgement at the step S202, if the operation input is for the display list execution, the image is generated, on the basis of the coordinate transformation parameters and the display list. The generated image is outputted from the drawing device 13.

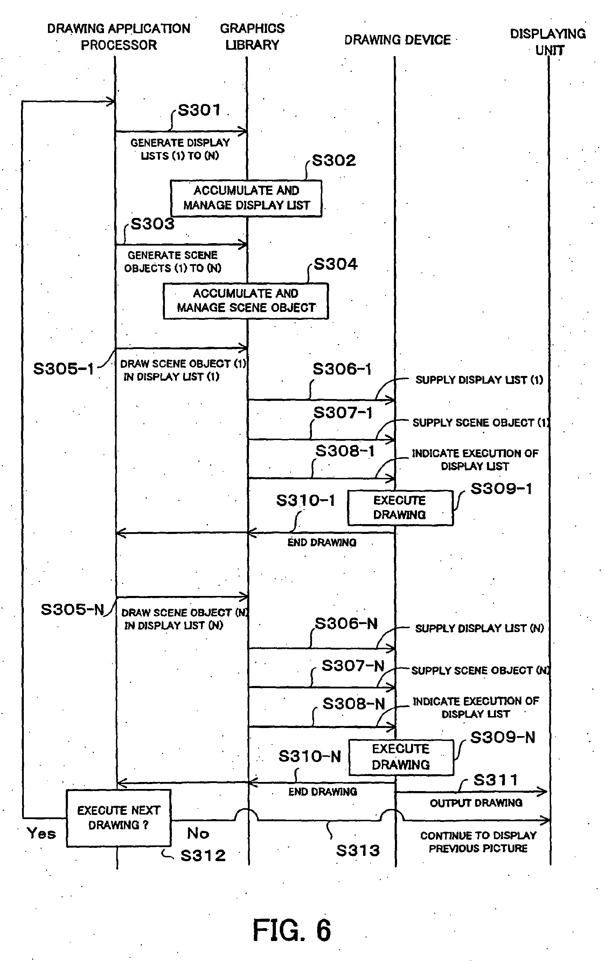

The operation of the image generating apparatus is described below in chronological order with reference to a sequence chart of FIG.6. This sequence chart shows, in chronological order, an inter-relationship among the drawing application processor 11, the graphics library 12, the drawing device 13 and the display unit 17, in which horizontal lines are representative of the inter-relationship, while vertical lines are representative of a lapse of time in a line from the top to the bottom.

At first, a display list is generated in the drawing application processor 11 and inputted into the graphics library 12 (Step S301). The display list is adapted to the drawing execution, then stored and managed in the graphics library 12 (Step S302).

Next, the drawing application processor 11 sends a command or instruction to the graphics library 12 in order to set the coordinate transformation parameter to the scene object (step S303). The graphics library 12 sets the scene object on the basis of the command or instruction, and then stores and manages it (step S304).

The display list and the scene object may be generated one by one, or may be generated and stored in a unit, such as display lists #1 to #N, and scene objects #1 to #N, in advance.

Next, the drawing application processor 11 sends the graphics library 12 a command or instruction to generate the image from the combination of the display list #1 and the scene object #1 (Step S305-1). In response to this command or instruction, the graphics library 12 supplies the display list #1 to the drawing device 13 (Step S306-1), and supplies the scene object #1 to the drawing device 13 (Step S307-1). Once the drawing data is supplied, a command or instruction to execute the display list is inputted (Step S308-1). In response to this command or instruction, the drawing device executes the image generation on the basis of the coordinate transformation parameter of the scene object using the display list (step S309-1). Once the drawing execution is completed, the fact of completion is sent to the graphics library 12 and the drawing application processor 11 (step S310-1).

Similarly, other images are generated successively from a combination of a display list #i and a scene object #i (wherein i=2,3,4....). Finally, the drawing application processor 11 sends a command or instruction to the graphics library 12 in order to generate the image from a combination of a display list #N and the scene object #N (step S305-N). In response to this command or instruction, the graphics library supplies the display list #N to the drawing device 13 (step S306-N) and supplies the scene object #N to the drawing device 13 (step S307-N). Once the drawing data is supplied, the display list execution is instructed (step S308-N). In response to this instruction, the drawing device executes the drawing on the basis of the coordinate transformation parameter of the scene object using the display list, (step S309-N). Once the drawing execution is completed, the fact of the completion is sent to the graphics library 12 and the drawing application processor 11 (step S310-N).

Then, as the drawing process is terminated, the image is outputted on the display unit 17 (step S311).

Receiving a report of the completion of the drawing process, the drawing application processor 11 judges whether or not the next drawing is to be executed (step S312). In the case that the next drawing is to be executed, the process goes back to the step S301, so that a new image is generated by repeating the above-mentioned drawing process. On the other hand, in the case that the next drawing is not to be executed, it may be decided whether the present image is to be left displayed (step S313) or to be deleted, depending on various conditions.

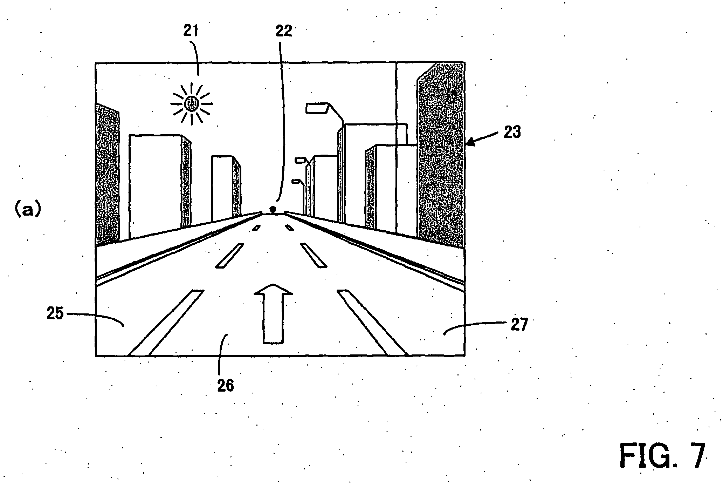

FIG.7 is an example of a display of the 3D image that is generated as mentioned above, showing a scene based on a driver's view from the inside of the vehicle that is running on a road in a town. In the figure, a light source 21, a visual point 22, a visual range 23 or the like is representative of the coordinate transformation information that is designated by the identifier to be incorporated into the scene object, while a building 24a, 24b, 24c...., a road 25 or the like is representative of the drawing object information. The light source 21 may be the sun (during the daytime), or a streetlamp (during the nighttime), whose position or lighting direction constitutes a parameter. On the other hand, the visual point 22 may be a point corresponding to the driver's visual point, allowing the driver to view the scene on the display unit as if it were a real scene around the vehicle. The visual range 23 is for defining a predetermined image range, which is suitably set for the driver.

On the other hand, the buildings 24a, 24b, 24c....., the road 25 or the like is representative of the drawing object information, and the display list relating to the drawing information is adapted so as to be executed directly by the drawing device. Such drawing object information may be the information that is supplied from a map information database or the like belonged to the navigation system. Further, with regard to a format as the drawing object information, it is represented in a form employing only a coordinate system without the coordinate transformation information.

In FIG. 7, on the basis of the information from the scene object, the light source 21 (the sun in this case) is ahead of the driver, while the side of the buildings 24a, 24b, 24c,..... that faces the driver is darkly shaded. On the other hand, the coordinate transformation is executed so that the drawing object such as the building 24a, 24b, 24c,....., the road 25 or the like within a range that is defined by the visual range 23 is converged in perspective on the visual point 22 that is located above the road 25.

As discussed above, handling separately the drawing object information and the coordinate transformation information facilitates the drawing through the high speed coordinate transformation of the image, while making a change to the coordinate transformation information facilitates the drawing of the same drawing object with different coordinates. Further, handling separately the drawing object information and the coordinate transformation information allows a selection or replacement of the drawing device.

### (Second Embodiment)

Next, an embodiment wherein the above-mentioned image generating apparatus is applied to a navigation system for a movable body is discussed below. As discussed below in detail, various function of the navigation system are closely related to the image generating apparatus and therefore incorporated into the same. Incidentally, the configuration and operation of the image generating apparatus in itself are of those mentioned above, for which the explanation is not repeated, but the explanation mentioned above is to be referred as appropriate.

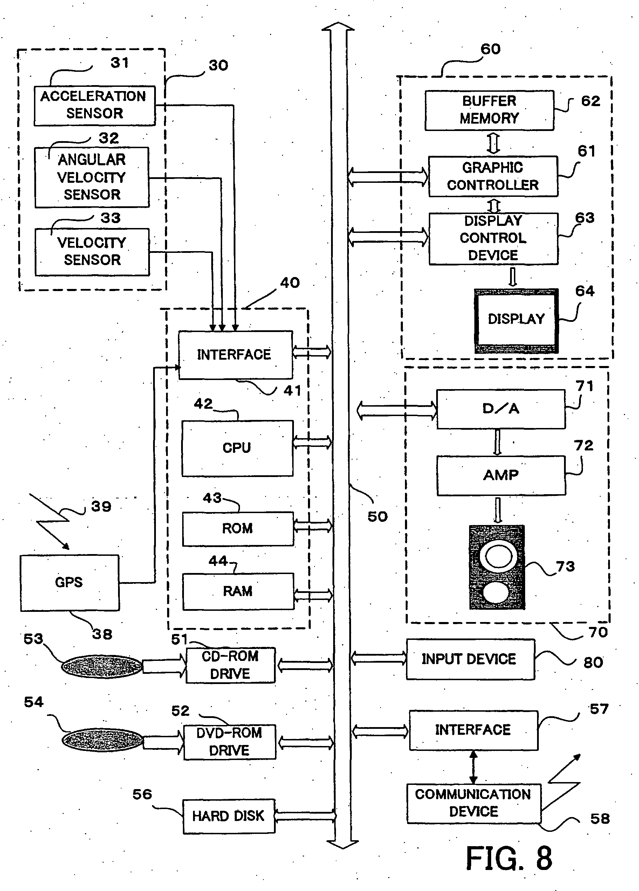

Firstly, the navigation system that is applied to the present embodiment is described in its outline, with reference to FIG. 8.

The navigation system is provided with a self-contained positioning apparatus 30, a GPS receiver 38, a system controller 40, an input/output (I/O) circuit 41, a CD-ROM drive 51, a DVD-ROM drive 52, a hard disk device (HDD) 56, a wireless communication device 58, a display unit 60, an audio output unit 70, an input device 80 and an external interface (I/F) unit 81, all of which are respectively connected to a bus line 50 for transferring control data and process data.

The self-contained positioning apparatus 30 is provided with an acceleration sensor 31, an angular rate sensor 32 and a velocity sensor 33. The acceleration sensor 31, for example made of a piezoelectric element, outputs an acceleration data that is obtained by detecting an acceleration of a vehicle. The angular rate sensor 32, for example made of a vibratory gyroscope, outputs an angular rate data and a relative azimuth data of a vehicle that is obtained by detecting the angular rate of the vehicle when a direction of the vehicle is changed. The velocity sensor 33 detects a rotation of a vehicle mechanically, magnetically or optically and outputs a pulse signal having a pulse number that corresponds to a velocity of the vehicle, every time when the rotation of a predetermined angle is detected about a vehicle shaft.

The GPS receiver 38 has a known configuration provided with a plane polarization non-directional reception antenna (heimen-henpa-mushikousei-jushin-antena) and a high frequency reception processor, and further a digital signal processor (DSP) or a micro processor unit (MPU), a V-RAM, a memory and so on. The GPS receiver 38 is arranged to receive electric waves from at least three GPS satellites orbiting around the earth, for a position calculation and a travel velocity azimuth calculation, through a spread spectrum demodulation (supekutoru-gyaku-kakusan), a distance measurement, a Doppler measurement and an orbit data processing, and output the resultant absolute position information of the receive point (a vehicle running point) continuously or consecutively from the I/O circuit 41 into the bus line 50, so that the system controller 40 takes the absolute position information to display on the road map of the screen.

The system controller 40 is provided with a CPU 42, a ROM 43 that is a non-volatile solid memory device, and a working RAM 44, and exchanges data with each unit or device that is connected to the bus line 50. The processing control through this data exchange is executed by a control program and a boot program that are stored in the ROM 43. The RAM 44 temporarily stores setting information and the like for changing a map display (changing between a whole map display and an area map display) in accordance to the user's operation via the input device 80.

The CD-ROM drive 51 and the DVD-ROM drive 52 read and output each of map database information (e.g. various road information such as the number of lanes, a road width or the like in the map information (map folio)) from the CD-ROM 53 and the DVD-ROM 54 in which the map database information is stored respectively.

The HDD 56 is operative to store the map (image) data that is read at the CD-ROM drive 51 or the DVD-ROM drive 52, and to read it at any time point later than this storing process. Further, the HDD 56 is also operative to store audio data or video data that is read from the CD-ROM drive 51 or the DVD-ROM drive 52. Thereby, for example, audio output or video output is allowed by reading the audio data or video data that is stored in the HDD 56, while the navigation processing is executed by reading the map data from the CD-ROM 53 or the DVD-ROM 54. Alternatively, the navigation processing is allowed by reading the map data that is stored in the HDD 56, while the audio output or video output is executed by reading the audio data or video data from the CD-ROM 53 or the DVD-ROM 54.

The display unit 60 displays various processing data on the scene under control of the system controller 40. With regard to the display unit 60, a graphic controller 61 disposed therein controls each part of the display unit 60, on the basis of the control data that is transferred from the CPU 42 via the bus line 50. Additionally, a buffer memory 62 such as V-RAM temporarily stores image information for a real-time display. Further, a display controller 63 controls the display processing to display the image data, which is outputted from the graphic controller 61, on the display member 64. This display member 64 may be disposed near a front panel in the vehicle.

With regard to the audio output unit 70, a D/A converter 71 converts the audio signal that is transmitted via the bus line 50 under control of the system controller 40 into the digital signal, while a variable amplifier (AMP) 72 variably amplifies the analog signal that is outputted from the D/A converter 72 to output to a speaker 73, from which the sound is outputted.

The input device 80 is provided with keys, switches, buttons, remote controllers and audio input devices, for inputting various commands or data. The input device 80 is disposed around a display 64 or a front panel of a body of the on-vehicle type electronic equipment that is mounted in the vehicle.

Here, in the case that the image generating apparatus according to the present invention is applied to a navigation system, it is required to appropriately display an image in agreement with a drive route. That is, it is desirable to display an image in three dimensions that is seen from the driver who is driving the vehicle on the road. Moreover, it is useful for the safety to inform the driver an image around a coming comer or a sight ahead of an unclear passage, which is displayed in three dimensions. Furthermore, it is required to display various superimposed massages on each image.

Therefore, the image generating apparatus according to the present invention can provide a remarkably effective navigation system by forming an integral system incorporating various devices and functions of a navigation system.

Next, incorporating various devices and functions of the navigation system with the image generating apparatus is discussed, with regard to the components.

The image generating apparatus captures separately the coordinate transformation information including the visual point, the visual range, the light source and the like, and the drawing object information including roads, buildings and the like at the drawing application processor 11, and then generates data as drawing data from each of these information at the graphics library 12, and then generates an image from these individual information at the drawing device 13, as mentioned above.

Firstly, the drawing object information is map information including roads and buildings available from a map database contained in the navigation system. The map information is stored in the CD-ROM 53 as well as DVD-ROM 54 which is readable using the CD-ROM drive 51 as well as DVD-ROM drive 52. Alternatively, the map information may be available from a predetermined web site via a communication device 58 to store into or use from the HDD 56. Alternatively, the map information of the drive route that is read using the CD-ROM drive 51 or the DVD-ROM drive 52 may be stored and then read at any desired time point later than this storing. This operation may be executed when a drive plan is made up.

The map information mentioned above, which is divided into multiple areas and designated by a coordinate system for each area, is transformed into only one coordinate system independent of the position of the visual point or the visual range by the display list generating routine 112 of the drawing application processor 11 in the image generating apparatus, in order to send an instruction to the display list preparation device 122 in the graphics library 12, where the map information is listed into the display list and stored (managed).

Next, relating to the coordinate transformation information that is involved in the image generating apparatus, such as the visual point, the visual range, the light source and so on, it is required to know a current position of the vehicle during the driving, which is determined from a self-contained positioning apparatus 30 or a GPS receiver 38 of the navigation system. From a comparison of a determined current position with the map information, a travel direction of the vehicle, and an appropriate visual point and visual range are determined. The visual point and visual range may be positioned at a predetermined position or range, or may be set manually.

On the other hand, once the travel direction of the vehicle and the present time is known, the bearing of the sun can be determined taking account of the seasonal factor, and a position of the light source can also be determined by assuming the bearing of the sun as the light source. Similarly, in the case that a scene around a spot that is desired to be reached after a predetermined time period is required, the bearing of the sun can be determined by designating the spot and the arrival time, and therefore an image that takes an effect of the position of the light source at the arrival time can be viewed.

Alternatively, a change of the shade from sunrise to sunset in the scene can be viewed, by incorporating the coordinate transformation information into the drawing object information with a condition of time that passes from moment to moment. Furthermore, the 3D image can be changed successively by changing the other coordinate transformation information successively. Particularly, in the case that a 3D image corresponding to a scene is to be displayed when the vehicle is running continuously on a road, the 3D image can be displayed efficiently and continuously by changing the coordinate transformation information in accordance to the driving while the drawing object information is fixed, as discussed above.

As mentioned above, the scene object as the coordinate transformation information can be determined by using the function of the navigation system, while the drawing object information can be determined by using the map information. Therefore, a 3D image can be generated from both the coordinate transformation information and the drawing object information, which are independent of each other, and the 3D image is directed to the display unit 60 of the navigation system, where the graphics controller 61 stores it in the buffer memory 62 that employs the V-RAM or the like, and further the 3D image is read from the buffer memory 62 to be displayed on the display 64 via the display controller 63.

Hereinabove, the image generating apparatus of the present invention has been discussed in the case that it is applied to the navigation system, nevertheless, it is not limited to this embodiment, and also suitable for an image generation in a personal computer, a work station, a mobile, a cell phone and the like, an image generation in a TV game, an arcade game, a mobile game and the like, and an image generation in a drive simulation device or a training device for various vehicles such as a automobile, a motorcycle, a plane, a helicopter, a rocket, a ship and the like.

Furthermore, the present invention is not limited to the above-mentioned embodiments but may be changed as appropriate in a range without departing from a spirit or essence of the present invention deduced from the claims and the whole specification, and such a changed image generating apparatus and method, electronic device and computer program are all encompassed within a technical concept of the present invention.

### Industrial Applicability

The present invention is applicable to an image generation in a navigation system, a personal computer, a cell phone and the like, an image generation in a TV game, a mobile game and the like, and an image generation in a drive simulation device or a training device for various vehicles such as a automobile, a plane, a ship and the like.

## Claims

1. An image generating apparatus having a drawing application processor and a graphics library that allow a drawing device to generate a three-dimensional image, **characterized in that**
said drawing application processor comprises (i) a drawing object information generating device for generating drawing object information to generate an image for each object in a single coordinate system for each predetermined information unit, on the basis of three-dimensional coordinate information included in a three-dimensional image to be generated, and (ii) a coordinate transformation information generating device for generating coordinate transformation information to define at least a visual point and a visual range when the three-dimensional image is to be generated,
said graphics library comprises (i) a drawing object information storing device for storing the generated drawing object information, and (ii) a coordinate transformation information storing device for storing the generated coordinate transformation information, and
said drawing device generates the three-dimensional image by incorporating the stored coordinate transformation information with the stored drawing object information, for said each predetermined information unit.

2. The image generating apparatus according to claim 1, **characterized in that**
a plurality of coordinate transformation information generated by said coordinate transformation information generating device are stored into said coordinate transformation information storing device,
a plurality of drawing object information generated by said drawing object information generating device are stored into said drawing object information storing device, and
said drawing device generates the three-dimensional image from a desired combination of the coordinate transformation information and the drawing object information.

3. The image generating apparatus according to claim 1, **characterized in that** said drawing application processor executes:
a list preparation program for preparing a list of the drawing object information;
a set up program for setting up the coordinate transformation information; and
an execution instruction program for instructing an execution of a drawing in said drawing device.

4. The image generating apparatus according to claim 1, **characterized in that** said graphics library comprises:
a function for managing the coordinate transformation information;
a function for managing the drawing object information; and
a function for controlling said drawing device.

5. The image generating apparatus according to claim 1, **characterized in that** said drawing application processor comprises a function for being supplied with map information including the three-dimensional coordinate information from a map database incorporated within a navigation system.

6. The image generating apparatus according to claim 1, **characterized in that** a system comprised of said graphics library and said drawing device has a mechanism replaceable with respect to said drawing application processor.

7. The image generating apparatus according to any one of claims 1 to 6, **characterized in that** said drawing device generates an image in perspective as the three-dimensional image.

8. The image generating apparatus according to any one of claims 1 to 6, **characterized in that** the coordinate transformation information includes information to define a light source, in addition to the information to define the visual point and the visual range.

9. The image generating apparatus according to any one of claims 1 to 6, **characterized in that** the visual point is set on the basis of a visual point of a driver of a vehicle.

10. The image generating apparatus according to any one of claims 1 to 6, **characterized in that** the visual range is set on the basis of a visual range of a driver of a vehicle.

11. The image generating apparatus according to any one of claims 1 to 6, **characterized in that** the visual point in the three-dimensional image is set at a center of a display device incorporated within a navigation system.

12. The image generating apparatus according to any one of claims 1 to 6, **characterized in that** said drawing device generates a three-dimensional image by superimposing a plurality of partial frame images that are to be generated on the basis of the plurality of drawing object information generated and stored for each object.

13. The image generating apparatus according to claim 12, **characterized in that** said image generating apparatus further comprises a frame buffer for temporarily storing the plurality of partial frame images.

14. The image generating apparatus according to any one of claims 1 to 6, **characterized in that** said drawing application processor re-generates the coordinate transformation information with the aid of said coordinate transformation information generating device, while the drawing object information is maintained for an object commonly included in two three-dimensional images in series which differ sequentially from each other with the course of time.

15. The image generating apparatus according to any one of claims 1 to 6, **characterized in that** said drawing application processor and said graphics library generate and store the drawing object information and the coordinate transformation information for the plurality of three-dimensional images in a multitask operation.

16. The image generating apparatus according to any one of claims 1 to 6, **characterized in that** said image generating apparatus comprises said drawing device.

17. An electronic equipment **characterized in that** said electronic equipment comprises:
the image generating apparatus according to claim 16;
an information source from which the three-dimensional information is supplied to said drawing application processor; and
a display device for visually outputting the three-dimensional image that is generated by said drawing device.

18. A computer program **characterized in that** said program makes a computer function as the image generating apparatus according to any one of claims 1 to 16.

19. An image generating method with an image generating apparatus having a drawing application processor and a graphics library that allow a drawing device to generate a three-dimensional image, **characterized in that**
said drawing application processor executes (i) a drawing object information generating process of generating drawing object information to generate an image for each object in a single coordinate system for each predetermined information unit, on the basis of three-dimensional coordinate information included in a three-dimensional image to be generated, and (ii) a coordinate transformation information generating process of generating coordinate transformation information to define at least a visual point and a visual range when the three-dimensional image is to be generated,
said graphics library executes (i) a drawing object information storing process of storing the generated drawing object information, and (ii) a coordinate transformation information storing process of storing the generated coordinate transformation information, and
said drawing device generates the three-dimensional image by incorporating the stored coordinate transformation information with the stored drawing object information, for the each predetermined information unit.

20. The image generating method according to claim 19, **characterized in that** said drawing application processor executes:
a list preparation process of preparing a list of the drawing object information;
a set up process of setting up the coordinate transformation information; and
an execution instruction process of instructing an execution of a drawing in said drawing device.

21. The image generating method according to claim 19 or 20, **characterized in that** said graphics library executes:
a process of managing the coordinate transformation information;
a process of managing the drawing object information; and
a process of controlling said drawing device.
